# EUROPÄISCHE PATENTSCHRIFT

(11) **EP 1 868 884 B1**
(45) Veröffentlichungstag und Bekanntmachung des Hinweises auf die Patenterteilung: **18.03.2009**
(21) Anmeldenummer: 06721900.6
(22) Anmeldetag: 07.04.2006
(51) Int. Cl.: B64B 1/58, B64B 1/24

(54) **ANTRIEB FÜR EINEN LEICHTER-ALS-LUFT-FLUGAPPARAT**
PROPULSION UNIT FOR LIGHTER-THAN-AIR AIRCRAFT
SYSTEME DE PROPULSION D'UN AEROSTAT

(30) Priorität: 12.04.2005 CH 660052005
(43) Veröffentlichungstag der Anmeldung: 26.12.2007
(73) Patentinhaber: EMPA Eidgenössische Materialprüfungs- und Forschungsanstalt, 8600 Dübendorf (CH)
(72) Erfinder: MICHEL, Silvain, CH-8700 Küsnacht (CH); KOVACS, Gabor, CH-8155 Oberweningen (CH); LOCHMATTER, Patrick, CH-8610 Uster (CH)
(74) Vertreter: Salgo, Reinhold Caspar
(86) Internationale Anmeldenummer: PCT/CH2006/000198
(87) Internationale Veröffentlichungsnummer: WO 2006/108311

(56) Entgegenhaltungen:
- WO-A-93/04916
- WO-A-97/45317
- WO-A-03/026954

## Beschreibung

Die vorliegende Erfindung betrifft einen Leichter-als-Luft-Flugapparat, nach dem Oberbegriff des unabhängigen Patentanspruches.

Leichter-als-Luft-Flugapparate sind viele bekannt, beispielsweise aus WO 00/73142 (D1). Für den Antrieb von Leichter-als-Luft-Flugapparaten werden ausschliesslich Luftschrauben, Propeller oder Impeller, eingesetzt. Diese Antriebskonzepte haben jedoch für Leichter-als-Luft-Flugapparate eine schlechten Wirkungsgrad infolge des schlechten Verhältnisses zwischen grosser, Luftwiderstand erzeugender Querschnittsfläche und verhältnismässig kleiner, von Propeller oder Impeller überstrichener Kreisfläche und damit verbundener grosser Geschwindigkeitsdifferenz zwischen Antriebsluftstrom und Nachlauf.

D1 offenbart einen typischen Antrieb für Leichter-als-Luft-Flugapparat mit zwei Luftschrauben für den Vortrieb und schwenkbaren Schubtriebwerken für die Steuerung. Bei Luftschiffen werden die Antriebe in der Regel aus statischen Gründen an der Zelle befestigt, obwohl unter anderem für die Anströmung der Steuerflächen diese Position nicht optimal ist. Das in D1 offenbarte Antriebskonzept weist die oben erwähnten Nachteile auf.

Insbesondere für energieautonome Leichter-als-Luft-Flugapparate, beispielsweise für solargetriebene aerostatische Kommunikationsplattformen, oder für energiesparende Luftschiffe mit grossen Aktionsradien und langen Funktionszeiten, beispielsweise für Überwachungs- und Fernerkundungsaufgaben, ist ein möglichst energieeffizienter Antrieb von zentraler Bedeutung.

Die Aufgabe der vorliegenden Erfindung besteht in der Schaffung eines Leichter-als-Luft-Flugapparates mit gegenüber herkömmlichen auf Luftschrauben basierenden Antriebskonzepten energieeffizienterem Antrieb.

Die Lösung der Aufgabe ist wiedergegeben im kennzeichnenden Teil des Anspruches 1 hinsichtlich ihrer wesentlichen Merkmale, in den folgenden Ansprüchen hinsichtlich weiterer vorteilhafter Ausbildungen. Zur weiteren Illustration des technischen Hintergrunds der Erfindung wird zudem auf die Dokumente WO 93/04916 und WO 03/026954 verwiesen.

Anhand der beigefügten Zeichnungen wird der Erfindungsgegenstand mittels mehrerer Ausführungsbeispiele näher erläutert.

Es zeigen
- Fig. 1: schematische Darstellung eines Leichter-als-Luft- Flugapparates gemäss dem Stand der Technik in Sei- tenansicht,
- Fig. 2a: schematische Darstellung eines ersten Ausführungs- beispiels eines Prallluftschiffes mit gestrecktem Traggaskörper in Draufsicht,
- Fig. 2b: schematische Darstellung eines ersten Ausführungs- beispiels eines Prallluftschiffes mit deformiertem Traggaskörper in Draufsicht,
- Fig. 3a-d: schematische Darstellung des Bewegungsablaufes für ein zweites Ausführungsbeispiel eines erfindungs- gemässen deformierbaren Traggaskörper in Drauf- sicht,
- Fig. 4a,b: schematische Darstellung eines dritten Ausführungs- beispiels eines Prallluftschiffes in Seitenansicht.

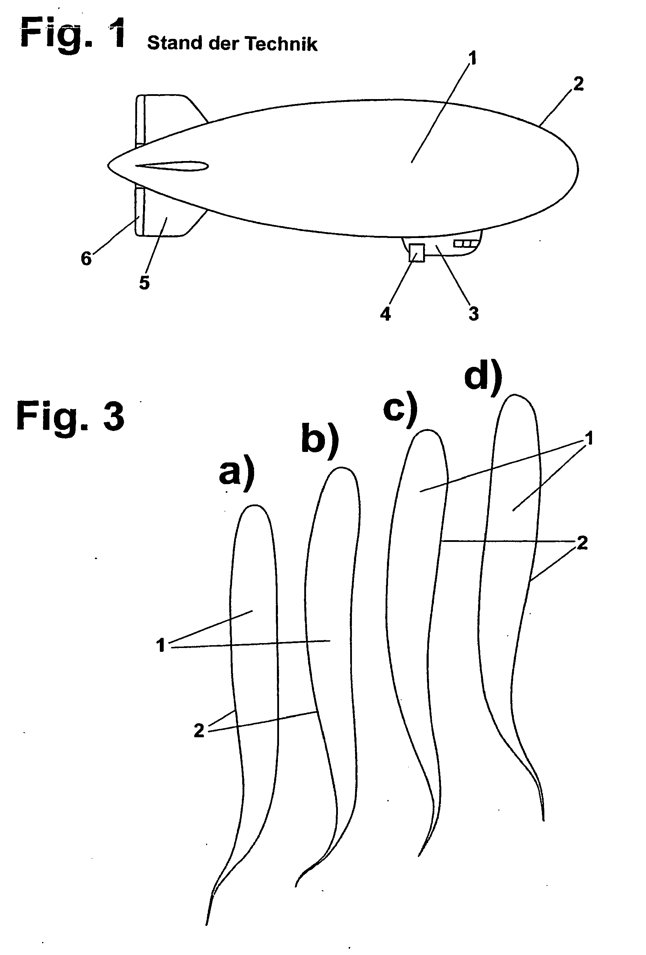

Die Fig. 1 zeigt ein Luftschiff gemäss dem Stand der Technik. Das Erscheinungsbild von Leichter-als-Luft-Flugapparaten wird geprägt durch einen grossen Traggaskörper 1 gefertigt aus einer gasdichten Hülle 2, der durch Befüllung mit einem Leichter-als-Luft-Gas den statischen Auftrieb zur Kompensation von Eigengewicht und Nutzlast liefert. Um das grosse Volumen möglichst luftwiderstandsarm bewegen zu können, ist der Traggaskörper 1 in der Regel tropfen- bis spindelförmig gestaltet. Eine unterhalb des Traggaskörpers 1 befestigte starre Zelle 3 dient der Aufnahme von Nutzlast und - bei bemannten Luftschiffen - der Besatzung. An der Zelle 3 können auch die Antriebe 4 für Vortrieb und Steuerung befestigt werden. Leitwerke 5 im hinteren Bereich des Traggaskörpers 1 dienen der Richtungsstabilisierung des Luftschiffes im Vorwärtsflug und können achtern schwenkbare Klappen 6 aufweisen, mittels welcher vertikale und seitliche Kursänderungen bewirkt werden können.

Im Luftschiffbau wird zwischen starren, halbstarren und unstarren Luftschiffen unterschieden. Starrluftschiffe verfügen über ein rigides Skelett, welches den ganzen Traggaskörper stützt, ihm Form gibt und über welches die Nutzlast auf den Traggaskörper geleitet werden kann. Halbstarre Luftschiffe weisen beispielsweise lediglich einen vom Bug zum Heck führenden Kiel auf, an welchem beispielsweise die Zelle und Leitwerke angebracht sind. Gegenüber starren und halbstarren Luftschiffen haben unstarre - auch als Prallluftschiffe oder Blimps bekannt - den Vorteil, entleerbar zu sein und somit für die Lagerung deutlich weniger Platz zu beanspruchen. Das Gewicht der Zelle 3 kann bei Prallluftschiffen mittels Seilverspannungen oder Webs auf die Hülle 2 verteilt werden.

Obwohl im Folgenden nur noch von Prallluftschiffen gesprochen wird, kann das erfindüngsgemässe Antriebskonzept analog auch auf halbstarre und starre Luftschiffe mit Schwenkgelenken in Kiel oder Skelett übertragen werden.

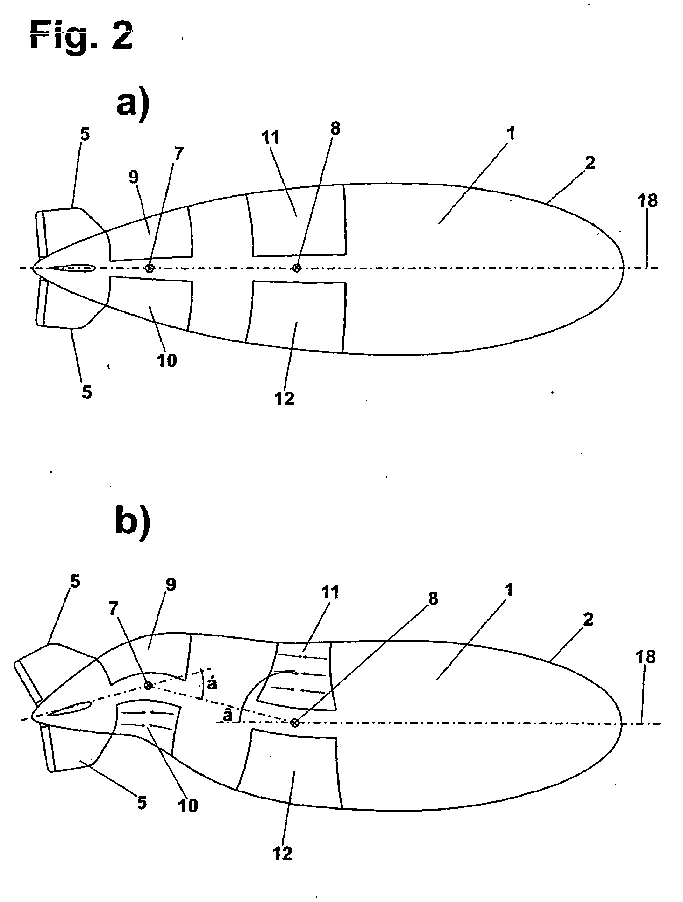

Die Fig. 2 zeigt ein erstes Ausführungsbeispiel eines Prallluftschiffes mit einem erfindungsgemässen Antrieb durch Deformation des Traggaskörpers.

Bei aquatischen Lebewesen, insbesondere bei Fischen, ist diese Antriebsform weit verbreitet und im Verlauf der Artentwicklung perfektioniert worden. Zahlreiche wissenschaftliche Publikationen befassen sich mit der Untersuchung fischähnlicher Fortbewegung und derer technischen Nachbildung, beispielsweise für Roboter-Fische.

Die Idee der vorliegenden Erfindung ist es, diese energieeffiziente Fortbewegungsmethode für Luftschiffe zu adaptieren. Das Spektrum der Vortriebserzeugung durch Deformation des Körpers reicht bei Fischen von Anguiliformen - Aalähnliche Fische, welche den ganzen Körper wellenförmig bewegen - bis zu Thuniformen - Thunfisch-ähnliche Formen mit im Wesentlichen starrem Körper und relativ zum Körper beweglicher schlanker, halbmondförmiger Schwanzflosse.

Das in Fig. 2 schematisch dargestellte erste Ausführungsbeispiel eines deformierbaren Prallluftschiffes weist im Wesentlichen zwei Schwenkachsen im Heckbereich auf und bewegt sich ähnlich wie eine Forelle beim Schnellschwimmen - siehe dazu auch den in Fig. 3 dargestellten Bewegungsablauf.

Fig. 2a zeigt den gestreckten Traggaskörper 1 von oben. Im hinteren Bereich des Traggaskörpers 1 sind zum besseren Verständnis der Bewegung zwei Schwenkachsen 7, 8 eingezeichnet. Bei einem Prallluftschiff sind diese Schwenkachsen 7, 8 nicht genau lokalisierbar. Stattdessen kann von Biegezonen 7, 8 gesprochen werden. Im Bereich dieser Schwenkachsen 7, 8 oder Biegezonen 7, 8 weist die Hülle 2 des Traggaskörpers 1 vier separat betätigbare laterale Aktorbereiche 9 - 12 auf, wobei die beiden Aktorbereiche 9, 10 und die beiden Aktorbereiche 11, 12 als Paare von Agonist-Antagonist wirken. In diesen Aktorbereichen 9 - 12 sind Aktoren auf oder in der Hülle 2 vorhanden, mittels welchen die Hülle 2 in Längsrichtung verkürzt werden kann. Dadurch biegt sich der Traggaskörper 1 um die Biegezonen 7, 8. Als Aktoren können beispielsweise elektroaktive Polymere (EAP) oder die auf der Anziehungskraft elektrisch geladener Beschichtungen basierten dielektrischen Elastomere verwendet werden. Diese sind dünn, leicht und mit erreichbaren Wirkungsgraden von bis zu 70% energieeffizient. Denkbar ist auch die Verwendung mehrerer linearer Aktoren, beispielsweise künstlicher Muskeln, pro Aktorbereich 9 - 12 anstelle eines oder mehrerer flächiger Aktoren.

In Fig. 2b ist der Traggaskörper 1 doppelt gekrümmt dargestellt. Zwei auf gegenüberliegenden Seiten liegende Aktorbereiche 10, 11 sind durch aktivierte Aktoren verkürzt. Die vertikale Symmetrieebene 18 des Traggaskörpers 1 und damit der Traggaskörper 1 selbst wird im Bereich der Biegezonen 7, 8 um die Winkel α und β geschwenkt. Aktivierung eines Aktors meint im Folgenden immer Verkürzung des Aktors. Als aktivierter Zustand gilt derjenige, bei dessen Einnahme der Aktor Arbeit für den Vortrieb des Prallluftschiffes leistet. Es gilt zu beachten, dass sich Aktoren aus dielektrischen Elastomeren bei Anlegen einer elektrischen Spannung verlängern. Ein solcher Aktor aus dielektrischem Elastomer (DEA) nimmt also den aktivierten Zustand ein, wenn keine elektrische Spannung anliegt.

Mittels Deformation des Traggaskörpers 1 kann nicht nur Vortrieb erzeugt werden. Durch asymmetrische Bewegungsabläufe können zusätzlich zum Vortrieb Richtungsänderungen bewirkt werden. Im in Fig. 2 dargestellten Ausführungsbeispiel können somit seitliche Richtungsänderungen auch ohne Klappen 6 am vertikalen Leitwerk 5 ausgeführt werden.

Die Fig. 3a - d zeigen teilweise den Bewegungsablauf eines zweiten Ausführungsbeispiels eines erfindungsgemässen deformierbaren Traggaskörpers 1. Der Bewegungsablauf gleicht demjenigen einer Forelle beim Schnellschwimmen. Die Forelle gehört zu den Carangiformen und ihre Vortriebserzeugung ist zwischen derjenigen der Anguliformen und der Thuniformen angesiedelt. Nebst der Schwanzflosse wird der hintere Teil des Körpers beim Schwimmen deformiert. Als vereinfachtes Modell für eine Zwischenstufe zwischen einem reinen Schwanzflossenschlag und der undulierenden Fortbewegungstechnik von Aalen, dienen drei im Wesentlichen starre Körper, die mittels zweier Schwenkgelenke 7, 8 miteinander verbunden sind. Diese Schwenkgelenke 7, 8 schwingen im Wesentlichen sinusförmig und gekoppelt mit einer Phasenverschiebung, wobei diese Phasenverschiebung beim in Fig. 3 dargestellten Biege-Dreh-Schwanzschlag im Fall des maximalen Vortriebs ungefähr 70° beträgt, jedoch je nach der gewünschten Art wählbar sein soll, je nachdem, ob eine Kraft vortriebsgenerierend, neutral oder bremsend erzeugt werden soll.

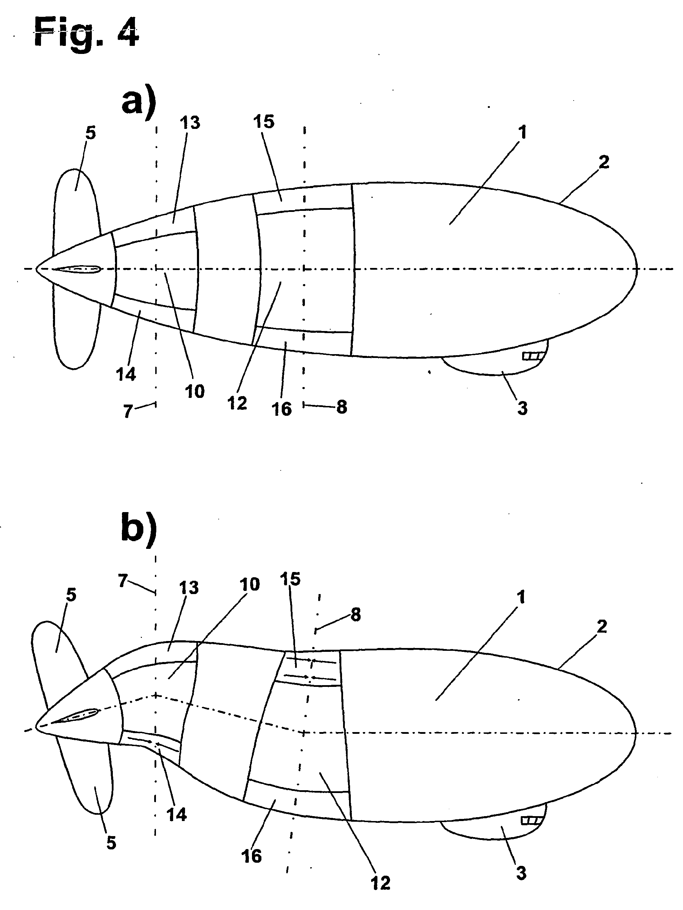

In Fig. 4 ist schematisch ein drittes Ausführungsbeispiel eines erfindungsgemässen Prallluftschiffes in Seitenansicht dargestellt. Fig. 4a zeigt den Traggaskörper 1 in gestrecktem Zustand; Fig. 4b in doppelt gekrümmtem Zustand.

Zusätzlich zu den im ersten Ausführungsbeispiel in Fig. 2 vorhandenen lateralen Aktorbereichen 9 - 12 sind zusätzlich obere Aktorbereiche 13, 15 und untere Aktorbereich 14, 16 wiederum im Bereich der Biegezonen 7, 8 vorhanden und dienen ebenfalls zur Verkürzung der Hülle 2 in Längsrichtung. Diese zusätzlichen Aktorbereiche 13 - 16 erlauben die Deformation des Traggaskörpers 1 in der vertikalen Ebene und ermöglicht so nebst einem vertikalen Biege-Dreh-Schwanzschlag zusätzlich die Höhensteuerung des Prallluftschiffes.

Es ist denkbar die Hülle 2 in den Biegezonen in mehr als acht Aktorbereiche einzuteilen oder die Aktorbereiche überlappend zu gestalten. Traggaskörper 1 mit mehr als zwei Biegezonen 7, 8 und zugehörigen Aktorbereichen 9 - 16 sind ebenfalls im Erfindungsgedanken enthalten. Bei vielen Biegezonen 7, 8 wird auch eine undulierende Verformung des Traggaskörpers 1 möglich. Ein solcher Vortrieb hat jedoch bezüglich Energieeffizienz Nachteile gegenüber dem Biege-Dreh-Schwanzschlag und ist zudem technisch wesentlich schwieriger realisierbar.

Die oben beschriebene fischähnliche Vortriebserzeugung kann auch für andere Leichter-als-Luft-Flugapparate, beispielsweise für starre oder halbstarre Luftschiffe, verwendet werden. Die starren Teile müssen dazu über Schwenkgelenke verfügen, damit der Traggaskörper 1 die nötigen Schwenkbewegungen ausführen kann.

## Patentansprüche

1. Leichter-als-Luft-Flugapparat mit einem Traggaskörper (1) mit einer gasdichten flexiblen Hülle (2), **dadurch gekennzeichnet, dass**
Mittel (9, 10, 11, 12) vorhanden sind zur Deformation des Traggaskörpers (1), wobei die Deformationen in mindestens einer Biegung der Längsachse des Traggaskörpers (1) besteht und wobei diese Deformationen des Traggaskörpers (1) einen Antrieb des Leichter-als-Luft-Flugapparates bewirken.

2. Leichter-als-Luft-Flugapparat nach Patentanspruch 1, **dadurch gekennzeichnet, dass**
die Steuerung des Leichter-als-Luft-Flugapparates durch Deformation des Traggaskörpers (1) erfolgt.

3. Leichter-als-Luft-Flugapparat nach einem der Patentansprüche 1 oder 2, **dadurch gekennzeichnet, dass** der Leichter-als-Luft-Flugapparat ein Prallluftschiff ist.

4. Leichter-als-Luft-Flugapparat nach Patentanspruch 3, **dadurch gekennzeichnet, dass**
seitlich am Traggaskörper (1) im Bereich der Biegezonen Aktorbereiche (9, 10, 11, 12) mit Aktoren vorhanden sind, welche bei Verkürzung der Aktoren eine Verkürzung der Hülle (2) im Wesentlichen in Längsrichtung des Traggaskörpers (1) bewirken.

5. Leichter-als-Luft-Flugapparat nach einem der Patentansprüche 3 oder 4, **dadurch gekennzeichnet, dass**
oben und unten am Traggaskörper (1) im Bereich der Biegezonen Aktorbereiche (13, 14, 15, 16) mit Aktoren vorhanden sind, welche bei Verkürzung der Aktoren eine Verkürzung der Hülle (2) im Wesentlichen in Umfangsrichtung des Traggaskörpers (1) bewirken.

6. Leichter-als-Luft-Flugapparat nach einem der Patentansprüche 3 bis 5, **dadurch gekennzeichnet, dass**
als Aktoren in den Aktorbereichen (9 - 16) Elektroaktive Polymere (EAP) oder die auf der Anziehungskraft elektrisch geladener Beschichtungen basierten dielektrischen Elastomere verwendet werden.

## Claims

1. A lighter-than-air flying vehicle with a gas-filled lifting body (1) with a gas-tight flexible covering (2), **characterised in that** means (9, 10, 11, 12) are present for the deformation of the gas-filled lifting body (1), wherein the deformations consist of at least one bending of the longitudinal axis of the gas-filled lifting body (1), and wherein these deformations of the gas-filled lifting body (1) effect a propulsion means for the lighter-than-air flying vehicle.

2. The lighter-than-air flying vehicle according to Claim 1, **characterised in that** the control of the lighter-than-air flying vehicle takes place by deformation of the gas-filled lifting body (1).

3. The lighter-than-air flying vehicle according to one of the Claims 1 or 2, **characterised in that** the lighter-than-air flying vehicle is an inflatable airship.

4. The lighter-than-air flying vehicle according to Claim 3, **characterised in that** actuator regions (9, 10, 11, 12) with actuators are present laterally on the gas-filled lifting body (1) in the region of the bending zones, which with a shortening of the actuators effect a shortening of the covering (2) essentially in the longitudinal direction of the gas-filled lifting body (1).

5. The lighter-than-air flying vehicle according to one of the Claims 3 or 4, **characterised in that** actuator regions (13, 14, 15, 16) with actuators are present above and below the gas-filled lifting body (1) in the region of the bending zones, which with a shortening of the actuators effect a shortening of the covering (2) essentially in the circumferential direction of the gas-filled lifting body (1).

6. The lighter-than-air flying vehicle according to one of the Claims 3 to 5, **characterised in that** electroactive polymers (EAPs) or dielectric elastomers based on the attractive force of electrically charged coatings are used as actuators in the actuator regions (9 - 16).

## Revendications

1. Appareil volant plus léger que l'air comportant un corps de gaz porteur (1) avec une enveloppe (2) flexible étanche aux gaz, **caractérisé en ce que** des moyens (9, 10, 11, 12) sont prévus pour la déformation du corps de gaz porteur (1), les déformations se produisant dans au moins une flexion de l'axe longitudinal du corps de gaz porteur (1) et ces déformations du corps de gaz porteur (1) produisant un entraînement de l'appareil volant plus léger que l'air.

2. Appareil volant plus léger que l'air selon la revendication 1, **caractérisé en ce que** la commande de l'appareil volant plus léger que l'air s'effectue par déformation du corps de gaz porteur (1).

3. Appareil volant plus léger que l'air selon l'une des revendications 1 ou 2, **caractérisé en ce que** l'appareil volant plus léger que l'air est un dirigeable souple.

4. Appareil volant plus léger que l'air selon la revendication 3, **caractérisé en ce que** sur le côté du corps de gaz porteur (1), des zones d'actionneurs (9, 10, 11, 12) avec des actionneurs sont prévues, lesquelles réduisent l'enveloppe (2) essentiellement dans la direction longitudinale du corps de gaz porteur (1) lorsque les actionneurs sont réduits.

5. Appareil volant plus léger que l'air selon l'une des revendications 3 ou 4, **caractérisé en ce qu'**au-dessus et au-dessous du corps de gaz porteur (1), au niveau des zones de flexion, des zones d'actionneurs (13, 14, 15, 16) avec des actionneurs sont prévues, lesquelles réduisent l'enveloppe (2) essentiellement dans la direction périphérique du corps de gaz porteur (1) lorsque les actionneurs sont réduits.

6. Appareil volant plus léger que l'air selon l'une des revendications 3 à 5, **caractérisé en ce que** des polymères électroactifs (EAP) ou des élastomères diélectriques basés sur les revêtements chargés électriquement sur la force d'attraction sont employés comme actionneurs dans les zones d'actionneurs (9 - 16).
